# EUROPÄISCHE PATENTSCHRIFT

(11) **EP 3 160 664 B1**
(45) Veröffentlichungstag und Bekanntmachung des Hinweises auf die Patenterteilung: **06.06.2018**
(21) Anmeldenummer: 15731285.1
(22) Anmeldetag: 18.06.2015
(51) Int. Cl.: B21B 27/03, B23K 20/02

(54) **WALZE UND VERFAHREN ZUM HERSTELLEN EINER WALZE ZUM WARM- ODER KALTWALZEN VON METALLFLACHPRODUKTEN**
ROLL AND METHOD FOR PRODUCING A ROLL FOR THE HOT OR COLD ROLLING OF FLAT METAL PRODUCTS
CYLINDRE ET PROCÉDÉ DE FABRICATION D'UN CYLINDRE DE LAMINAGE À CHAUD OU À FROID DE PRODUITS MÉTALLIQUES PLATS

(30) Priorität: 24.06.2014 DE 102014108823
(43) Veröffentlichungstag der Anmeldung: 03.05.2017
(73) Patentinhaber: Steinhoff GmbH & Cie. OHG, 46537 Dinslaken (DE)
(72) Erfinder: STEINHOFF, Karl, 46535 Dinslaken (DE); HECKMANN, Carl, Justus, 40489 Düsseldorf (DE)
(74) Vertreter: Cohausz & Florack
(86) Internationale Anmeldenummer: PCT/EP2015/063733
(87) Internationale Veröffentlichungsnummer: WO 2015/197466

(56) Entgegenhaltungen:
- WO-A1-2014/001024
- JP-A- S6 352 703
- JP-A- H04 100 614
- JP-A- S56 152 908

## Beschreibung

Die Erfindung betrifft eine Walze und ein Verfahren zum Herstellen einer Walze zum Warm- oder Kaltwalzen von Metallflachprodukten, wobei die Walze einen Ballenabschnitt, der mit einer verschleißfesten Schicht beschichtet ist, und zwei koaxial zum Ballenabschnitt ausgerichtete Zapfen aufweist, von denen jeweils einer an eine der Stirnseiten des Ballenabschnitts angeformt ist.

Bei mit solchen Walzen kalt- oder warmgewalzten Metallflachprodukten handelt es sich typischerweise um Bänder, Bleche oder daraus gewonnene Zuschnitte, die aus Stahl oder Nichteisenmetall bestehen.

Zum Walzen von Metallflachprodukten eingesetzte Walzen sind in der Praxis einerseits in Folge der beim Walzen auftretenden Walzkräften hohen dynamischen Kräften ausgesetzt und andererseits im Bereich ihrer Umfangsflächen, die mit dem Walzgut in Kontakt kommen, hohem Verschleiß unterworfen.

Um die Standzeiten von beim Warmwalzen von Stahlwarmband eingesetzten Arbeitswalzen zu erhöhen, ist in der DE 10 2009 037 278 A1 vorgeschlagen worden, eine Arbeitswalze, die in einem Gerüst zum Fertigwarmwalzen von aus Stahl bestehendem Warmband eingesetzt wird, mit einer verschleißresistenten Schicht zu versehen, die aus pulvermetallurgischem Material durch heißisostatisches Pressen, in der Fachsprache auch kurz als "HIP" bezeichnet, hergestellt sein soll. Ein vergleichbarer Vorschlag findet sich in der EP 1 365 869 B1, gemäß der ebenfalls eine zum Warmwalzen eingesetzte Arbeitswalze zur Erhöhung ihrer Verschleißbeständigkeit mit einer durch das HIP-Verfahren aufgebrachten Schicht versehen ist.

Bei der Fertigung derartiger Arbeitswalzen wird zunächst durch Gießen oder Schmieden ein aus Gusseisen oder einem geeigneten Stahl bestehender Grundkörper hergestellt, der einen im Einsatz mit dem Walzgut in Kontakt kommenden Ballenbereich und daran angeformte Lagerzapfen umfasst, über die die Walze im jeweiligen Walzgerüst gelagert wird. Der Werkstoff des Grundkörpers weist dabei mechanische Eigenschaften auf, die optimal auf die im praktischen Einsatz auftretenden Kraftbelastungen abgestimmt sind.

Der derart vorgefertigte Grundkörper wird dann mit einer Blechkapsel umhüllt. Diese ist so dimensioniert, dass zwischen ihrer Innenumfangsfläche und der Umfangsfläche des Ballens ein um den Grundkörper umlaufender Hohlraum gebildet ist. Dieser Hohlraum wird mit einem Legierungspulver gefüllt. Daraufhin wird die Blechkapsel gasdicht verschlossen. Anschließend erfolgt die Verdichtung unter allseitig wirkendem hohen Druck und hoher Temperatur. Druck und Temperatur werden dabei so eingestellt, dass das Pulver verdichtet und versintert. Auf diese Weise wird auf dem Grundkörper eine vollständig dichte Schicht erzeugt, bei der nicht nur die einzelnen Pulverkörner miteinander, sondern mit dem Grundkörper versintert sind, so dass ein homogener Verbundkörper entsteht. Nach Ende des heißisostatischen Pressens wird die Blechkapsel abgetragen. Es kann abschließend eine thermische Nachbehandlung erfolgen, um der erhaltenen Verbundwalze die geforderten mechanischen Eigenschaften zu verleihen. Ebenso erfolgt in der Regel eine mechanische Endbearbeitung, um die geforderte Maßhaltigkeit zu gewährleisten.

In modernen Walzstraßen werden immer höhere Anforderungen an die Breite des verarbeiteten Walzguts gestellt. Dementsprechend müssen immer längere Walzen zur Verfügung gestellt werden, um größere Breiten betriebssicher walzen zu können. Als problematisch erweist sich hier, dass der mit der Beschichtung von derart langen Walzen im HIP-Verfahren verbundene Aufwand beträchtlich ist. So nimmt der für das heißisostatische Pressen erforderliche apparative Aufwand mit zunehmender Länge der Walzen überproportional zu. Heute zur Verfügung stehende HIP-Anlagen sind daher in ihrer Länge so begrenzt, dass mit ihnen Walzen, deren Dimensionen an die heutigen Forderungen der Betreiber von Walzstraßen angepasst sind, nicht mehr verarbeitet werden können.

In der WO 2014/001024 A1 ist zur Lösung dieses Problems vorgeschlagen worden, für die Herstellung von Walzen für das Kalt- oder Warmwalzen von Metallflachprodukten zunächst einen Grundkörper zu fertigen, der sich lediglich über den Ballenbereich der zu fertigenden Walze erstreckt, dann diesen Grundkörper durch heißisostatisches Pressen mit einer verschleißfesten Schicht zu belegen und erst danach die zum drehbaren Lagern der Walze im Walzgerüst benötigten Zapfen an den Grundkörper anzuschweißen. Dadurch, dass die Zapfen gemäß diesem Vorschlag erst nach dem heißisostatischen Pressen mit dem Grundkörper verbunden werden, lassen sich die zur Verfügung stehenden HIP-Anlagen über ihre volle Länge für das HIP-Beschichten des Ballenbereichs nutzen, wogegen bei konventioneller Vorgehensweise nicht nur der Ballenbereich, sondern auch die an den Ballenbereich des Grundkörpers bereits angeformten Zapfen in der HIP-Anlage untergebracht werden müssen.

Vor dem Hintergrund des voranstehend erläuterten Standes der Technik bestand die Aufgabe der Erfindung darin, ein Verfahren anzugeben, mit dem sich eine für das Warm- oder Kaltwalzen von Metallflachprodukten geeignete Walze kosteneffektiv herstellen lässt, die bei einer maximierten Länge optimale mechanische Eigenschaften und eine ebenso optimierte Verschleißbeständigkeit besitzt.

Ebenso sollte eine für das Warm- oder Kaltwalzen von Metallflachprodukten bestimmte Walze mit einem solchen Eigenschaftsspektrum geschaffen werden.

In Bezug auf das Verfahren hat die Erfindung diese Aufgabe dadurch gelöst, dass bei der Herstellung einer Walze zum Kalt- oder Warmwalzen die in Anspruch 1 angegebenen Verfahrensschritte absolviert werden.

In Bezug auf die Walze besteht die erfindungsgemäße Lösung der voranstehend genannten Aufgabe darin, dass sie die in Anspruch 11 angegebenen Merkmale besitzt.

Vorteilhafte Ausgestaltungen der Erfindung sind in den abhängigen Ansprüchen angegeben und werden nachfolgend wie der allgemeine Erfindungsgedanke im Einzelnen erläutert.

Das erfindungsgemäße Verfahren dient somit zum Herstellen einer Walze zum Warm- oder Kaltwalzen von Metallflachprodukten, wobei die Walze einen Ballenabschnitt, der mit einer verschleißfesten Schicht beschichtet ist, und zwei koaxial zum Ballenabschnitt ausgerichtete Zapfen aufweist, von denen jeweils einer an eine der Stirnseiten des Ballenabschnitts angeformt ist. Erfindungsgemäß lässt sich eine solche Walze in großer Länge betriebssicher und unter optimaler Ausnutzung der zur Verfügung stehenden Anlagentechnik dadurch herstellen, dass folgende Arbeitsschritte durchlaufen werden:
a) Bereitstellen eines Grundkörperrohlings, an dem
   - ein Ballenabschnitt, der eine langgestreckte zylindrische Grundform aufweist und aus einem Grundkörperwerkstoff besteht, und
   - zwei Zapfenrohabschnitte vorgesehen sind, von denen jeweils einer an einer der Stirnseiten des Ballenabschnitts ausgebildet ist und die jeweils einen größeren Durchmesser als der Ballenabschnitt aufweisen, wobei das Materialvolumen der Zapfenrohabschnitte mindestens gleich dem Volumen des der jeweiligen Stirnseite zugeordneten Zapfens der fertigen Walze ist;
b) Ummanteln des Ballenabschnitts mit einem rohrförmigen Mantel, wobei der Mantel mit seinen den Zapfenrohabschnitten zugeordneten Randbereichen dicht an die ihm jeweils zugeordneten Stirnseiten der Zapfenrohabschnitte angeschlossen wird und zwischen dem Mantel und dem Ballenabschnitt ein um den Ballenabschnitt umlaufender Hohlraum gebildet ist;
c) Füllen des Hohlraums mit einem Legierungspulver;
d) heißisostatisches Pressen des Legierungspulvers, um aus dem Legierungspulver durch Verdichten und Versintern die den Ballenabschnitt ummantelnde, stoffschlüssig mit dem Ballenabschnitt verbundene verschleißfeste Schicht zu bilden;
e) Entfernen des Mantels von dem Ballenabschnitt;
f) Umformen der Zapfenrohabschnitte zu den Zapfen;
g) Fertigbearbeiten des Ballenabschnitts und der Zapfen.

Beim erfindungsgemäßen Verfahren wird von einem Grundkörperrohling ausgegangen, an dem nicht nur der Ballenabschnitt, sondern bereits auch die Zapfenrohabschnitte ausgebildet sind, aus denen im weiteren Verfahren die Zapfen der zu erzeugenden Walze geformt werden. Dieses Vorgehen hat den entscheidenden Vorteil, dass bei der fertigen Walze ein einstückiger Grundkörper verwirklicht ist, bei dem keine Fügezonen, thermische Einflusszonen oder desgleichen vorhanden sind, die den Ausgangspunkt für die Entstehung von Rissen oder desgleichen bilden können. Stattdessen sind bei einer in erfindungsgemäßer Weise gefertigten Walze die Zapfen und der Ballenabschnitt jeweils über den gesamten Bereich des Querschnitts, über den der jeweilige Zapfen und die zugeordnete Stirnseite des Ballenabschnitts aufeinanderstoßen, stoffschlüssig miteinander verbunden. Die nach dem Beschichten des Ballenabschnitts erfolgende Umformung der Zapfenrohabschnitte hat zudem den Vorteil, dass die Zapfen über ihren gesamten Querschnitt und ihre gesamte Länge einen Eigenschaftsverlauf aufweisen, der sie optimal geeignet macht, die im Betrieb der Walze auftretenden Kraftbelastungen aufzunehmen. Die Umformung des jeweiligen Zapfenrohabschnitts kann dabei praxisgerecht durch Schmieden erfolgen.

Unabhängig davon, wie sie jeweils erzeugt werden, müssen die an einem erfindungsgemäß bereitgestellten Grundkörperrohling vorgesehenen Zapfenrohabschnitte jeweils so dimensioniert sein, dass ihr Volumen mindestens dem Volumen entspricht, das der aus ihnen jeweils zu formende Zapfen bei der fertigen Walze einnimmt. Optimaler Weise wird dabei jeweils von einem gewissen Volumenüberschuss der Zapfenrohabschnitte gegenüber dem Volumen der fertigen Zapfen ausgegangen, um ausreichend Material für die mechanische Fertigbearbeitung zur Verfügung zu haben.

Da sich das Volumen der Zapfenrohabschnitte über einen deutlich größeren Durchmesser verteilt als das Volumen der Zapfen, weisen die Zapfenrohabschnitte in Längsachsrichtung der Walze und des Grundkörperrohlings gesehen eine wesentlich geringere Länge auf als die aus ihnen zu formenden Zapfen. Dementsprechend kann die auf diese Weise für die Zapfen beim Grundkörperrohling "eingesparte" Länge dem Ballenabschnitt zugeschlagen werden. Mit der Erfindung kann auf diese Weise die für das heißisostatische Pressen zur Verfügung stehende Anlagengröße genutzt werden, um gegenüber der konventionellen Vorgehensweise deutlich verlängerte Ballenabschnitte von Walzen für das Warm- oder Kaltwalzen mit einer pulvermetallurgisch erzeugten verschleißfesten Schicht zu belegen. Gleichzeitig weisen die erfindungsgemäß erzeugten und beschaffenen Walzen optimale Gebrauchseigenschaften auf, da der Ballenabschnitt und die Zapfen ihres Grundkörpers im fertigen Zustand eine stoffliche Einheit bilden, ohne dass dazu eine Verschweißung oder andere Maßnahmen vorgenommen werden müssen, die zu einer Bauteilschwächung führen können.

Dabei ist der Durchmesser der Zapfenrohabschnitte eines erfindungsgemäß bereitgestellten Grundkörperrohlings bezogen auf die Längsachse der herzustellenden Walze bzw. des Grundkörperrohlings so zu dimensionieren, das der Mantel, der im Arbeitsschritt b) des erfindungsgemäßen Verfahrens um den Ballenabschnitt des Grundkörpers gelegt wird, mit seinem zugeordneten Randbereich gegen die ihm jeweils zugeordnete Stirnseite der Zapfenrohabschnitte stößt. Auf diese Weise ist eine einfache gasdichte Abdichtung des Mantels möglich. Da der Mantel üblicherweise aus einem Blechmaterial besteht, kann dies durch Verschweißen des jeweiligen Mantelrandbereichs mit der zugeordneten Stirnseite des jeweiligen Zapfenabschnitts erfolgen.

Der nach dem Ummanteln zwischen dem Mantel und dem Ballenabschnitt des Grundkörperrohlings vorhandene umlaufende Hohlraum wird nun mit einem geeigneten Legierungspulver gefüllt. Typischerweise eingesetzt werden hierfür die unter den Werkstoffnummern 1.3394 oder 1.3292 genormten Legierungen. Die Befüllung kann in jeder geeigneten Weise erfolgen. So ist es beispielsweise denkbar, das Pulver über ein durch den Mantel geführtes Rohr in den Hohlraum einzubringen. Selbstverständlich können auch mehrere solcher Einfüllrohre vorgesehen sein, die erforderlichenfalls einen Legierungspulverstrahl unter unterschiedlichen Eintreffwinkeln in den Hohlraum richten, um eine gleichmäßige Füllung zu gewährleisten. Ebenso denkbar ist es, die Befüllung des den Ballenabschnitt umgebenden Hohlraums über eine Zuführleitung vorzunehmen, die durch eine der Zapfenrohabschnitte geführt ist.

Das heißisostatische Pressen des in den den Ballenabschnitt umgebenden Hohlraum gefüllten Legierungspulvers kann in an sich bekannter Weise durch Anlegen eines ausreichenden Drucks von beispielsweise 100 - 200 bar und ausreichender Wärmezufuhr, durch die das Pulver mit dem Ballenabschnitt auf Temperaturen von bis zu 1500 °C gebracht wird, erfolgen. Ziel ist es dabei, aus dem Legierungspulver durch Verdichten und Versintern eine den Ballenabschnitt ummantelnde, stoffschlüssig mit dem Ballenabschnitt verbundene verschleißfeste Schicht zu bilden.

Nach dem heißisostatischen Pressen wird der Mantel entfernt und so die auf dem Ballenabschnitt des Grundkörpers gebildete verschleißfeste Beschichtung freigelegt.

Nun können in der voranstehend schon erläuterten Weise die Zapfen aus den Zapfenrohabschnitten geformt werden.

Schließlich erfolgt die Fertigbearbeitung des Ballenabschnitts und der Zapfen. Hierzu werden die Zapfen oder der Ballenabschnitt erforderlichenfalls zur Einstellung ihrer mechanischen Eigenschaften einer Wärmebehandlung unterzogen, die ein Austenitisieren und Anlassen umfasst, sowie durch spanabhebende Bearbeitungsverfahren mechanisch bearbeitet, um die Anforderungen an Oberflächenqualität und Maßhaltigkeit zu erfüllen.

Üblicherweise werden die Grundkörper von Walzen der hier in Rede stehenden Art aus Stahl- oder Gusseisen erzeugt. Ein hierfür geeigneter Werkstoff ist unter der Werkstoffnummer 1.2602 genormt.

Denkbar ist es auch hier, dass der Grundkörperrohling mit seinem Ballenabschnitt und seinen Zapfenrohabschnitten einstückig durch ein Urformverfahren, insbesondere Gießen, hergestellt wird.

Ebenso ist es möglich, zunächst einen knüppelförmigen Gussrohling oder desgleichen zu gießen und diesen anschließend durch Schmieden zu dem Gussrohling zu formen. Auch hier können der Ballenabschnitt und die Zapfenrohabschnitte einstückig aus dem Gussrohling geformt werden.

Eine weitere durch die Erfindung umfasste Möglichkeit der Herstellung des Grundkörperrohlings besteht darin, den Ballenabschnitt und die Zapfenrohabschnitte des Grundköperrohlings getrennt voneinander herzustellen und anschließend unlösbar miteinander zu verbinden. Die unlösbare Verbindung kann beispielsweise dadurch erfolgen, dass die Zapfenrohabschnitte und der Ballenabschnitt über in entsprechende Ausnehmungen greifende Zapfen miteinander so verkoppelt sind, dass sich die beiden Teile durch die beim heißisostatischen Pressen eintretende Erwärmung infolge von Festkörperdiffusion stoffschlüssig miteinander verbinden.

Unabhängig davon, wie der Grundkörperrohling hergestellt ist, wird er vor dem heißisostatischen Pressen üblicherweise mechanisch so bearbeitet werden, dass optimale Voraussetzungen für eine höchsten Anforderungen genügende Maßhaltigkeit der herzustellenden Walze geschaffen sind.

Soll bei einer erfindungsgemäß beschaffenen Walze auch im Bereich der Zapfen eine Randschicht mit bestimmten Eigenschaften, beispielsweise mit einer erhöhten Verschleißfestigkeit, erzeugt werden, kann dies dadurch bewerkstelligt werden, dass der Ballenabschnitt des Grundkörperrohlings an mindestens einer seiner Stirnseiten jeweils einen Zapfenstummel trägt und der Zapfenrohabschnitt an der betreffenden Stirnseite dadurch hergestellt ist, dass der Zapfenstummel von einer mit einem Legierungspulver gefüllten Ummantelung umgeben ist und dass das den Zapfenstummel umgebende Legierungspulver durch heißisostatisches Pressen verdichtet und gesintert wird, so dass es stoffschlüssig mit dem Zapfenstummel verbunden ist und gemeinsam mit dem Zapfenstummel den Zapfenrohabschnitt bildet.

Grundsätzlich kann der jeweilige Zapfenstummel einen Durchmesser aufweisen, der kleiner ist als der Durchmesser des Ballenabschnitts. In diesem Fall wird der Zapfenstummel zur Erzeugung des Zapfenrohabschnitts mit einer aus Blech bestehenden Einkapselung versehen, die die Form des Zapfenrohabschnitts abbildet und gegen die der Mantel des Ballenabschnitts abgedichtet wird. Soll jedoch die jeweilige Randschicht des Zapfens auf eine geringe Dicke beschränkt werden, so kann dazu der Durchmesser des Zapfenstummels so dimensioniert werden, dass er größer ist als der Durchmesser des Ballenabschnitts. Diese Variante hat den zusätzlichen Vorteil, dass der Mantel des Ballenabschnitts gegen das Vollmaterial des Zapfenstummels abgedichtet werden kann.

Das jeweils für die Beschichtung des Zapfenstummels und des Ballenabschnitts vorgesehene Legierungspulver kann so abgestimmt werden, dass die aus ihm jeweils im Bereich der Zapfen und des Ballenabschnitts gebildeten Schichten die an sich gestellten Anforderungen optimal erfüllen. Hierzu kann es zweckmäßig sein, für die Beschichtung des Zapfens und des Ballenabschnitts unterschiedlich legierte Legierungspulver zu verwenden. Beispiele für die zur Ausbildung der Zapfenschicht geeigneten Legierungspulver sind die Pulver mit den unter der Werkstoffnummer 1.3344 oder unter der Werkstoffnummer 1.3394 genormten Legierungen.

In vergleichbarer Weise ist es möglich, mindestens einen der Zapfenrohabschnitte des Grundkörperrohlings dadurch zu bilden, dass der Ballenabschnitt des Grundkörperrohlings an mindestens einer seiner Stirnseiten jeweils einen Zapfenstummel trägt und dass auf diesen Zapfenstummel ein Ringabschnitt befestigt wird, der gemeinsam mit dem Zapfenstummel den Zapfenrohabschnitt bildet.

Eine erfindungsgemäße Walze zum Kalt- oder Warmwalzen von Metallflachprodukten mit einem Grundkörper, der einen Ballenabschnitt und an dessen Stirnseiten angeformte Zapfen aufweist, wobei der Ballenabschnitt mit einer durch heißisostatisches Pressen erzeugte verschleißresistente Beschichtung besitzt, ist folglich dadurch gekennzeichnet, dass die Zapfen nach dem Aufbringen der verschleißresistenten Beschichtung durch Schmieden ausgebildet und anschließend mechanisch fertig bearbeitet worden sind.

Nachfolgend wird die Erfindung anhand einer Ausführungsbeispiele darstellenden Zeichnung näher erläutert. Es zeigen jeweils schematisch und nicht maßstäblich:
- Fig. 1: einen vorgeschmiedeten Gussrohling in perspektivischer Ansicht;
- Fig. 2: einen durch Schmieden aus dem Gussrohling erzeugten Grundkörperrohling in perspektivischer Ansicht;
- Fig. 3: den Grundkörperrohling nach einer mechanischen spanabhebenden Bearbeitung in perspektivischer Ansicht;
- Fig. 4a: den Grundkörper nach dem Umhüllen seines Ballenabschnitts mit einem Mantel aus Stahlblech in perspektivischer Ansicht;
- Fig. 4b: den Grundkörper gemäß Fig. 4a in einem längsgeschnittenen Ausschnitt seines einen Endbereichs;
- Fig. 5a: den Grundkörper nach dem heißisostatischen Pressen und nach der Entfernung des Mantels in perspektivischer Ansicht;
- Fig. 5b: den Grundkörper gemäß Fig. 5a in einem längsgeschnittenen Ausschnitt seines einen Endbereichs;
- Fig. 6: eine aus dem Grundkörper gemäß Fig. 5a,5b geformte Walze in perspektivischer Ansicht;
- Fig. 7: einen weiteren zum heißisostatischen Pressen vorbereiteten Grundkörperrohling im Längsschnitt;
- Fig. 8: einen dritten zum heißisostatischen Pressen vorbereiteten Grundkörperrohling im Längsschnitt;
- Fig. 9: einen vierten zum heißisostatischen Pressen vorbereiteten Grundkörperrohling im Längsschnitt;
- Fig. 10: einen fünften zum heißisostatischen Pressen vorbereiteten Grundkörperrohling im Längsschnitt.

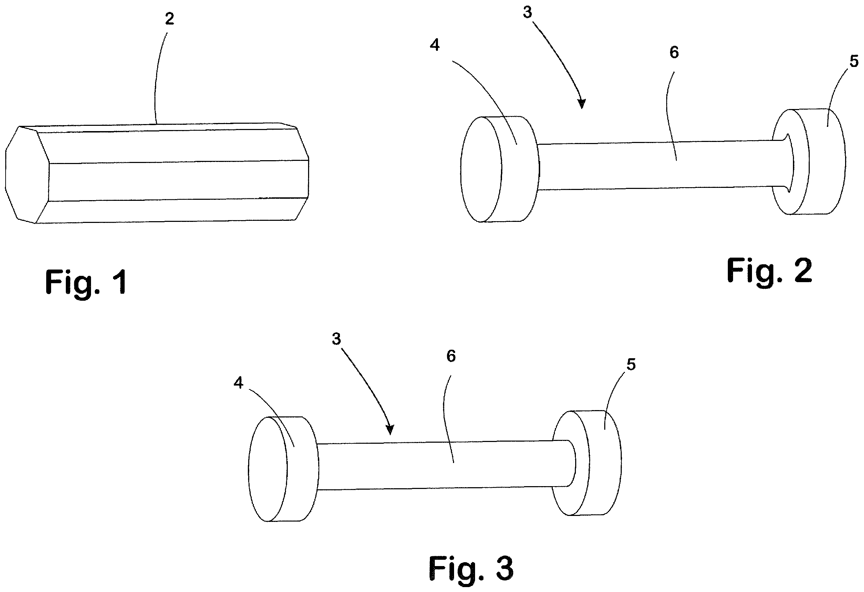

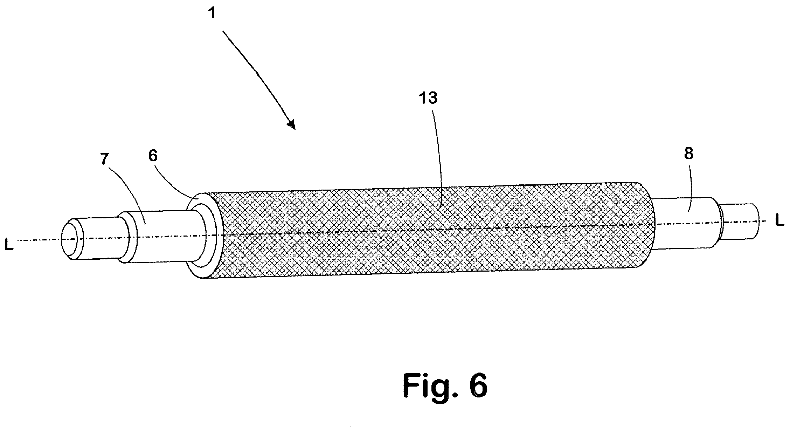

Zur Herstellung der in Fig. 6 dargestellten erfindungsgemäßen Walze 1 wird zunächst eine Stahlschmelze, die entsprechend der unter der Werkstoffnummer 1.7225 genormten Zusammensetzung legiert ist, zu einem knüppelförmigen Gussrohling 2 vergossen, der anschließend durch Schmieden in an sich bekannter Weise in die in Fig. 1 dargestellte Form gebracht wird.

Anschließend wird der Gussrohling 2 ebenfalls durch Schmieden zu einem Grundkörperrohling 3 geformt, der die Form einer Hantel aufweist, deren Gewichte durch die Zapfenrohabschnitte 4,5 und deren Stange durch den Ballenabschnitt 6 gebildet ist, der die Zapfenrohabschnitte 4,5 einstückig miteinander verbindet (Fig. 2).

Nach dem Schmieden durchläuft der Grundkörperrohling 3 eine mechanisch spanabhebende Bearbeitung, in der er seine Geometrie so optimiert wird, dass einerseits der Ballenabschnitt 6 den für den späteren Walzeneinsatz erforderlichen Durchmesser besitzt und andererseits die Abmessungen der scheibenförmig ausgebildeten Zapfenrohabschnitte 4,5 so bestimmt sind, dass das in ihnen versammelte Materialvolumen mit einem bestimmten Übermaß dem Volumen der später aus ihnen zu formenden Zapfen 7,8, der Walze 1 entspricht (Fig. 3).

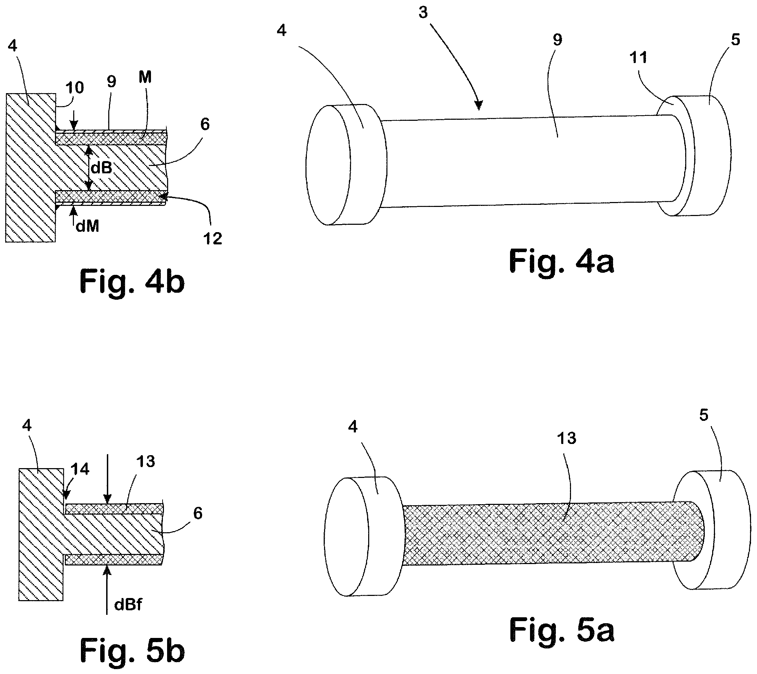

Im nächsten Arbeitsschritt wird der Ballenabschnitt 6 mit einem Mantel 9 aus Stahlblech umhüllt, der ein koaxial zur Längsachse L des Grundkörperrohlings 3 ausgerichtetes Rohr bildet. Der Mantel 9 erstreckt sich dabei zwischen den einander zugeordneten Stirnseiten 10,11 der Zapfenrohabschnitte 4,5. Sein Durchmesser dZ ist um ein bestimmtes Übermaß größer als der Durchmesser dB des Ballenabschnitts 6, so dass zwischen der äußeren Umfangsfläche des Ballenabschnitts 6 und der inneren Umfangsfläche des Mantels 9 ein um den Ballenabschnitt 6 umlaufender Hohlraum 12 gebildet ist. Mit seinen Rändern stößt der Mantel 9 dabei gegen die jeweils zugeordnete Stirnseite 10,11 der Zapfenrohabschnitte 4,5, deren Durchmesser dZ wiederum deutlich größer ist als der Durchmesser dM des Mantels 9. Im Bereich der Stoßstelle sind die Ränder des Mantels 9 dicht mit der jeweiligen Stirnseite 10,11 verschweißt (Fig. 4a, 4b).

Über eine in Fig. 4a,4b nicht gezeigte Zuführung wird ein Legierungspulver M in den Hohlraum 12 gefüllt, das entsprechend der unter der Werkstoffnummer 1.3394 genormten Legierung zusammengesetzt ist.

Anschließend wird der Grundkörperrohling 3 in eine Anlage zum heißisostatischen Pressen gesetzt, in der das im Hohlraum 12 vorhandene Legierungspulver M bei Drücken von etwa 100 MPa und Temperaturen, die im Bereich von 900 °C - 1200 °C liegen, verdichtet und zu einer dichten Schicht 13 versintert wird, die in Folge von Festkörperdiffusion stoffschlüssig mit dem Ballenabschnitt 6 des Grundkörperrohlings 3 verbunden ist. Nach Abschluss des heißisostatischen Pressvorgangs wird der Mantel 9 von dem Grundkörperrohling 3 abgetrennt. Es entsteht dabei ein umlaufender Schlitz 14, durch den auch die Schicht 13 von den Zapfenrohabschnitten 4,5 getrennt ist (Fig. 5a, 5b).

Im nächsten Arbeitsschritt werden die Zapfenrohabschnitte 4,5 in an sich bekannter Weise zu den Zapfen 7,8 der Walze 1 umgeschmiedet. Abschließend werden sie mechanisch endbearbeitet und erforderlichenfalls zur Einstellung ihrer mechanischen Eigenschaften einer Wärmebehandlung unterzogen.

Die fertige Walze 1 weist dementsprechend einen Grundkörper auf, bei dem die Zapfen 7,8 und der Ballenabschnitt 6 aus einem Ausgangsmaterial einstückig geformt sind, wobei die Zapfen 7,8 erst nach dem pulvermetallurgisch erfolgenden Auftrag der verschleißfesten Schicht 13 durch Schmieden und anschließende Fertigbearbeitung geformt worden sind.

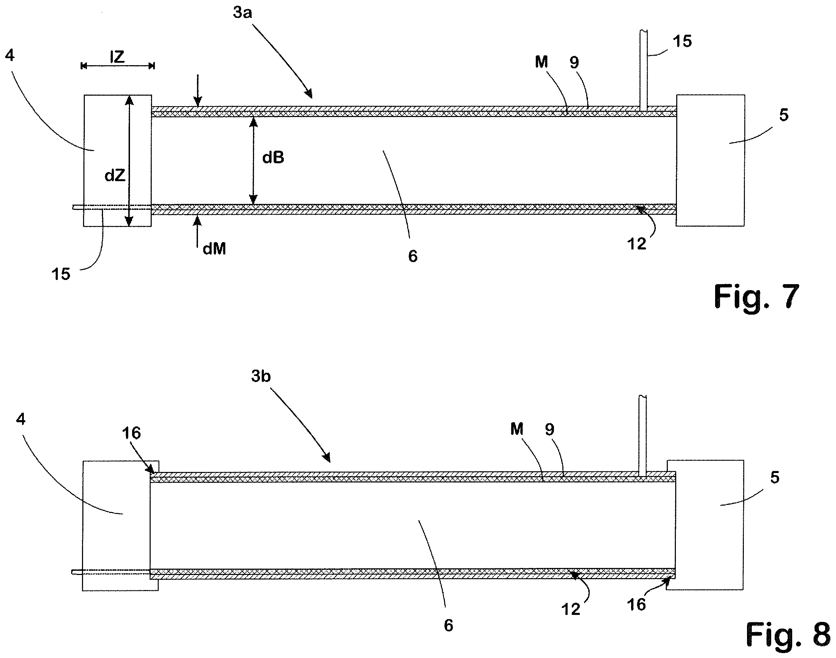

Die Figuren 7 - 10 zeigen Varianten von für das heißisostatische Pressen vorbereiteten Grundkörperrohlingen 3a,3b,3c und 3d.

Bei der in Fig. 7 dargestellten Variante ist das jeweilige Volumen V der Zapfenrohabschnitte 4,5 nach der Formel *V = dZ²*(π/4) lZ so bestimmt worden, dass es mit einem Bearbeitungszuschlag dem Volumen des jeweils aus einem der Zapfenrohabschnitte 4,5 zu formenden Zapfens 7,8 der Walze 1 entspricht. Mit lZ ist dabei die in Richtung der Längsachse L gemessene Länge des Zylinderrohabschnitts 4,5 bezeichnet, wogegen dZ den unter Verarbeitungsgesichtspunkten und unter Berücksichtigung der zur Verfügung stehenden HIP-Anlage maximal möglichen Außendurchmesser der Zapfenrohabschnitte 4,5 bezeichnet. Die Ballenlänge lB und der Ballendurchmesser dB sind ebenfalls unter Berücksichtigung der Abmessungen der HIP-Anlage und den Vorgaben des Kunden ausgelegt worden. Nachdem der entsprechend dimensionierte Grundkörperrohling 3 in der voranstehend beschriebenen Weise erzeugt worden ist, ist er mit einem aus Stahlblech bestehenden Mantel 9 ummantelt worden, dessen Durchmesser dM unter Berücksichtigung der Fülldichte und der Schwindung des Legierungspulvers M so ausgelegt worden ist, dass nach dem HIP-Prozess der verlangte Durchmesser dBf des fertig beschichteten Ballenabschnitts 6 der Walze 1 erhalten wird. Die Stahlbleche werden miteinander gasdicht verschweißt, auf Gasdichtheit geprüft, durch einen in den vom Mantel 9 umgebenen Hohlraum 12 durch den Mantel 9 oder durch einen der Zylinderrohabschnitte 4,5 führenden Einfüllstutzen 15 mit Pulver gefüllt, evakuiert und verschlossen. Dieser Grundkörperrohling 3 ist dann in die HIP-Anlage eingebracht und das Pulver durch die Kombination von Druck, Temperatur und Haltezeit auf eine Dichte von 100 % gebracht worden. Nach dem HIP-Prozess werden die Zapfenrohabschnitte 4,5 durch Freiformschmieden auf die gewünschte Zapfenlänge gebracht, ohne dass der Ballen 6 beeinflusst wird. Anschließend werden die Zapfen 7,8 auf das Schleifmaß bearbeitet, gehärtet und an den erforderlichen Stellen nochmals nachgeschliffen.

Beim in Fig. 8 dargestellten Grundkörperrohling 3b ist das Volumen der Zapfenrohabschnitte 4,5 wie voranstehend erläutert bestimmt worden. Jedoch ist hier in die dem Ballenabschnitt 6 zugeordnete Stirnseite 10,11 der Zapfenrohabschnitte 4,5 eine um den Ballenabschnitt 6 umlaufende Nut 16 eingestochen worden, in die der Mantel 9 eingeschoben ist. Beim Grundkörperrohling 3b überlappt sich somit das Volumen der Zylinderrohabschnitte 4,5 und das Volumen des Ballenabschnitts 6 um die Tiefe der Nut 16. Dies erlaubt eine weitere effektive Verlängerung des Ballenabschnitts 6 oder eine Reduzierung des Durchmessers dZ der Zylinderrohabschnitte 4,5. Im Übrigen durchläuft der Grundkörperrohling 3b dieselben Arbeitsschritte wie der zuvor erläuterte Grundkörperrohling 3a.

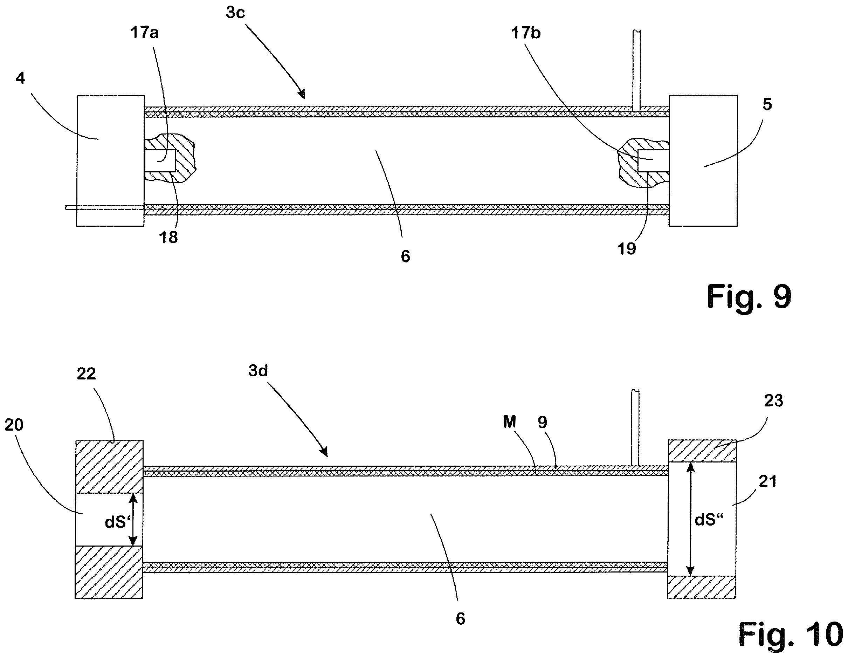

Beim in Fig. 9 dargestellten Grundkörperrohling 3c sind die Zapfenrohabschnitte 4,5 und der Ballenabschnitt 6 in separaten Arbeitsschritten als Einzelstücke vorgefertigt worden. Die Zapfenrohrabschnitte 4,5 tragen dabei auf ihrer dem Ballenabschnitt 6 zugeordneten Stirnseite 10,11 jeweils einen zentral angeordneten Vorsprung 17a,17b, der in eine in die zugordnete Stirnseite des Ballenabschnitts 6 eingeformte, entsprechend ausgebildete Ausnehmung 18,19 greift. Das Spiel zwischen dem Vorsprung und der Ausnehmung beträgt dabei 0,1 - 0,5 mm. Nachdem die Zylinderrohabschnitte 4,5 und der Ballenabschnitt 6 zu dem Grundkörperrohling 3c zusammengesetzt sind, wird der Ballenabschnitt 6 in der voranstehend erläuterten Weise mit dem Mantel 9 umhüllt. Anschließend erfolgt das heißisostatische Pressen in der voranstehend ebenfalls schon erläuterten Weise. Dabei bildet sich nicht nur die verschleißfeste Schicht 13 auf dem Ballenabschnitt 6, sondern es verbinden sich gleichzeitig die Zylinderrohabschnitte 4,5 und der Ballenabschnitt 6 im Bereich ihrer aneinander anliegenden Flächen, insbesondere im Bereich der Vorsprünge 17a,17b durch Festkörperdiffusion. Nach dem HIP-Prozess durchläuft auch der Grundkörperrohling 3c die voranstehend bereits erläuterten Arbeitsschritte, um ihn zu einer Walze fertigzuformen.

Die in Fig. 10 dargestellte Variante verdeutlicht schließlich, dass die Zylinderrohabschnitte 4,5 auch dadurch gebildet sein können, dass an den Ballenabschnitt 6 beim Grundkörperrohling 3d Zapfenstummel 20,21 angeformt sind, von denen der eine Zapfenstummel 20 einen kleineren Durchmesser dS' aufweist als der Ballenabschnitt 6, wogegen der Zapfenstummel 21 einen Durchmesser dS" besitzt, der größer als der Durchmesser dB des Ballenabschnitts 6 ist. Keiner der Zapfenstummel 20,21 hat jedoch ein Materialvolumen, das ausreicht, um aus ihnen die Zapfen 7,8 der zu erzeugenden Walze 1 zu formen. Auf die Zapfenstummel 20,21 ist jeweils ein Ring 22,23 aufgeschoben, dessen Außendurchmesser so dimensioniert ist, dass er wiederum dem in der oben beschriebenen Weise berechneten erforderlichen Durchmesser dZ der Zylinderrohabschnitte 4,5 entspricht. Der sichere Halt der Ringe 22,23 auf dem jeweils zugeordneten Zapfenstummel 20,21 kann durch Aufschrumpfen gewährleistet werden. Alternativ oder ergänzend kann auch eine formschlüssige Verbindung, beispielsweise in Form eines Gewindes oder einer Nut-Feder-Verbindung, vorgesehen sein.

Um sicherzustellen, dass sich die Ringe 22,23 und die Zapfenstummel 20,21 im Zuge der abschließenden Schmiedeverformung sicher stoffschlüssig miteinander verbinden, kann der Grundkörperrohling 3d mit einer Stahlkapsel gasdicht umschlossen und durch einen Evakuierstutzen über mindestens 4 Stunden evakuiert werden. Anschließend erfolgt das gasdichte Zusammenpressen des Evakuierstutzens und Umschmieden des Rohlings zu der zu erzeugenden Walze 1. Auf diese Weise kann verhindert werden, dass sich im Fügespalt zwischen den Zapfenstummeln 20,21 und den Ringen 22,23 Oxide bilden, die eine stoffschlüssige Verbindung behindern würden.

### BEZUGSZEICHEN

- 1: Walze
- 2: Gussrohling
- 3,3a,3b,3c,3d: Grundkörperrohlinge
- 4,5: Zapfenrohabschnitte
- 6: Ballenabschnitt
- 7,8: Zapfen der Walze 1
- 9: Mantel
- 10,11: Stirnseiten der Zapfenrohabschnitte 4,5
- 12: umlaufender Hohlraum
- 13: verschleißresistente Schicht
- 14: umlaufender Schlitz
- 15: Einfüllstutzen
- 16: umlaufende Nut
- 17a,17b: Vorsprünge
- 18,19: Ausnehmungen
- 20,21: Zapfenstummel
- 22,23: Ringe

- dB: Durchmesser des Ballenabschnitts 6
- dBf: Durchmesser des fertig beschichteten Ballenabschnitts
- dM: Durchmesser des Mantels 9
- dS',dS": Durchmesser der Zapfenstummel 20,21
- dZ: Durchmesser der Zapfenrohabschnitte 4,5
- L: Längsachse des Grundkörperrohlings
- lZ: Länge des Zylinderrohabschnitts 4,5
- M: Legierungspulver

## Patentansprüche

1. Verfahren zum Herstellen einer Walze (1) zum Warm- oder Kaltwalzen von Metallflachprodukten, wobei die Walze (1) einen Ballenabschnitt (6), der mit einer verschleißfesten Schicht (13) beschichtet ist, und zwei koaxial zum Ballenabschnitt (6) ausgerichtete Zapfen aufweist, von denen jeweils einer an eine der Stirnseiten des Ballenabschnitts (6) angeformt ist, umfassend folgende Arbeitsschritte:
a) Bereitstellen eines Grundkörperrohlings (3,3a,3b,3c,3d), an dem
- ein Ballenabschnitt (6), der eine langgestreckte zylindrische Grundform aufweist und aus einem Grundkörperwerkstoff besteht, und
- zwei Zapfenrohabschnitte (4,5) vorgesehen sind, von denen jeweils einer an einer der Stirnseiten des Ballenabschnitts (6) ausgebildet ist und die jeweils einen größeren Durchmesser (dZ) als der Ballenabschnitt (6) aufweisen, wobei das Materialvolumen der Zapfenrohabschnitte (4,5) mindestens gleich dem Volumen des der jeweiligen Stirnseite zugeordneten Zapfens (7,8) der fertigen Walze (1) ist;
b) Ummanteln des Ballenabschnitts (6) mit einem rohrförmigen Mantel (9), wobei der Mantel (9) mit seinen den Zapfenrohabschnitten (4,5) zugeordneten Randbereichen dicht an die ihm jeweils zugeordneten Stirnseiten (10,11) der Zapfenrohabschnitte (4,5) angeschlossen wird und zwischen dem Mantel (9) und dem Ballenabschnitt (6) ein um den Ballenabschnitt (6) umlaufender Hohlraum (12) gebildet ist;
c) Füllen des Hohlraums (12) mit einem Legierungspulver (M) ;
d) heißisostatisches Pressen des Legierungspulvers (M), um aus dem Legierungspulver (M) durch Verdichten und Versintern die den Ballenabschnitt (6) ummantelnde, stoffschlüssig mit dem Ballenabschnitt (6) verbundene verschleißfeste Schicht (13) zu bilden;
e) Entfernen des Mantels (9) von dem Ballenabschnitt (6) ;
f) Umformen der Zapfenrohabschnitte (4,5) zu den Zapfen (7,8) ;
g) Fertigbearbeiten des Ballenabschnitts (6) und der Zapfen (7,8).

2. Verfahren nach Anspruch 1, **dadurch gekennzeichnet, dass** der Grundkörperrohling (3,3a,3b,3c,3d) mit seinem Ballenabschnitt (6) und seinen Zapfenrohabschnitten (4,5) durch ein Urformverfahren einstückig hergestellt ist.

3. Verfahren nach Anspruch 1, **dadurch gekennzeichnet, dass** der Grundkörperrohling (3,3a,3b,3c,3d) mit seinem Ballenabschnitt (6) und seinen Zapfenrohabschnitten (4,5) einstückig durch Schmieden eines Gussrohlings hergestellt ist.

4. Verfahren nach Anspruch 1, **dadurch gekennzeichnet, dass** der Ballenabschnitt (6) und die Zapfenrohabschnitte (4,5) des Grundköperrohlings (3,3a,3b,3c,3d) getrennt voneinander hergestellt und anschließend unlösbar miteinander verbunden werden.

5. Verfahren nach Anspruch 1, **dadurch gekennzeichnet, dass** der Ballenabschnitt (6) des Grundkörperrohlings (3,3a,3b,3c,3d) an mindestens einer seiner Stirnseiten jeweils einen Zapfenstummel (20,21) trägt und **dass** der Zapfenrohabschnitt (4,5) an der betreffenden Stirnseite dadurch hergestellt ist, dass der Zapfenstummel (20,21) von einer mit einem Legierungspulver gefüllten Ummantelung umgeben ist und dass das den Zapfenstummel (20,21) umgebende Legierungspulver durch heißisostatisches Pressen verdichtet und gesintert wird, so dass es stoffschlüssig mit dem Zapfenstummel (20,21) verbunden ist und gemeinsam mit dem Zapfenstummel (20,21) den Zapfenrohabschnitt (4,5) bildet.

6. Verfahren nach Anspruch 5, **dadurch gekennzeichnet, dass** der Durchmesser (dS") des Zapfenstummels (21) größer ist als der Durchmesser (dB) des Ballenabschnitts (6).

7. Verfahren nach Anspruch 5 oder 6, **dadurch gekennzeichnet, dass** das dem Ballenabschnitt (6) zugeordnete Legierungspulver sich von dem Legierungspulver unterscheidet, das dem Zapfenrohabschnitt (4,5) zugeordnet ist.

8. Verfahren nach einem der Ansprüche 5 bis 7,
**dadurch gekennzeichnet, dass** das heißisostatische Pressen des dem Ballenabschnitt (6) zugeordneten Legierungspulvers und des dem Zapfenrohabschnitts (4,5) zugeordneten Legierungspulvers zeitgleich erfolgt.

9. Verfahren nach Anspruch 1, **dadurch gekennzeichnet, dass** der Ballenabschnitt (6) des Grundkörperrohlings (3,3a,3b,3c,3d) an mindestens einer seiner Stirnseiten jeweils einen Zapfenstummel (20,21) trägt und **dass** auf diesen Zapfenstummel (20,21) ein Ring (22,23) befestigt wird, der gemeinsam mit dem Zapfenstummel (20,21) den Zapfenrohabschnitt (4,5) bildet.

10. Verfahren nach einem der voranstehenden Ansprüche, **dadurch gekennzeichnet, dass** die Befüllung des um den Ballenabschnitt (6) umlaufenden Hohlraums (12) durch eine in einen der Zapfenrohabschnitte (4,5) eingeformte Öffnung (15) erfolgt.

11. Walze (1) zum Kalt- oder Warmwalzen von Metallflachprodukten mit einem Grundkörper, der einen Ballenabschnitt (6) und an dessen Stirnseiten angeformte Zapfen (7,8) aufweist, wobei der Ballenabschnitt (6) mit einer durch heißisostatisches Pressen erzeugten verschleißresistenten Beschichtung versehen ist, wobei die Zapfen (7,8) nach dem Aufbringen der verschleißresistenten Beschichtung (13) durch Schmieden ausgebildet und anschließend mechanisch fertig bearbeitet worden sind.

## Claims

1. Method for manufacturing a roll (1) for the hot or cold rolling of flat metal products, wherein the roll (1) comprises a barrel section (6), which is coated with a wear-resistant layer (13), and two journals, oriented coaxially with the barrel section (6), one of which is in each case formed on one of the end faces of the barrel section (6), comprising the following working steps:
a) Provision of a main body blank (3,3a,3b,3c,3d) on which
- a barrel section (6), which has an elongated cylindrical basic form and which consists of a main body material, and
- two blank journal sections (4,5) are provided, one of which is in each case formed on one of the end faces of the barrel section (6) and which each have a larger diameter (dZ) than the barrel section (6), wherein the material volume of the blank journal sections (4,5) is at least equal to the volume of the journal (7,8) of the finished roll (1) associated with the respective end face;
b) encasing the barrel section (6) with a tubular-formed jacket (9), wherein the jacket (9) is connected, with its edge regions associated with the blank journal sections (4,5), in a sealed manner, to the associated end faces (10,11) of the blank journal sections (4,5) and a cavity (12) surrounding the barrel section (6) is formed between the jacket (9) and the barrel section (6);
c) filling the cavity (12) with an alloy powder (M);
d) hot isostatic pressing of the alloy powder (M) in order to form the wear-resistant layer (13) coating the barrel section (6) which forms a substance-to-substance bond with the barrel section (6) from the alloy powder (M) through compression and sintering;
e) removing the jacket (9) from the barrel section (6);
f) forming the blank journal sections (4,5) into the journals (7,8);
g) finishing of the barrel section (6) and the journals (7,8) .

2. Method according to claim 1, **characterised in that** the main body blank (3,3a,3b,3c,3d) with its barrel section (6) and its blank journal sections (4,5) is formed in a single piece through a primary forming method.

3. Method according to claim 1, **characterised in that** the main body blank (3,3a,3b,3c,3d) with its barrel section (6) and its blank journal sections (4,5) is formed in a single piece through forging of a cast blank.

4. Method according to claim 1, **characterised in that** the barrel section (6) and the blank journal sections (4,5) of the main body blank (3,3a,3b,3c,3d) are manufactured separately from one another and subsequently connected inseparably with one another.

5. Method according to claim 1, **characterised in that** the barrel section (6) of the main body blank (3,3a,3b,3c,3d) carries a journal stub (20,21) on at least one of its end faces and **that** the blank journal section (4,5) is created on the relevant end face **in that** the journal stub (20,21) is enclosed by a jacket filled with an alloy powder and that the alloy powder surrounding the journal stub (20,21) is compressed and sintered through hot isostatic pressing, so that it forms a substance-to-substance bond with the journal stub (20,21) and together with the journal stub (20,21) forms the blank journal section (4,5).

6. Method according to claim 5, **characterised in that** the diameter (dS") of the journal stub (21) is greater than the diameter (dB) of the barrel section (6).

7. Method according to claim 5 or 6, **characterised in that** the alloy powder used for the barrel section (6) is different from the alloy powder used for the blank journal section (4,5) .

8. Method according to one of the claims 5 to 7, **characterised in that** the hot isostatic pressing of the alloy powder used for the barrel section (6) and of the alloy powder used for the blank journal section (4,5) takes place simultaneously.

9. Method according to claim 1, **characterised in that** the barrel section (6) of the main body blank (3,3a,3b,3c,3d) carries a journal stub (20,21) on at least one of its end faces and **that** a ring (22,23) is fixed to this journal stub (20,21) which together with the journal stub (20,21) forms the blank journal section (4,5).

10. Method according to one of the preceding claims, **characterised in that** the filling of the cavity (12) surrounding the barrel section (6) takes place through an opening (15) formed in one of the blank journal sections (4,5).

11. Roll (1) for the cold or hot rolling of flat metal products with a main body comprising a barrel section (6) and journals (7,8) formed on its end faces, wherein the barrel section (6) is provided with a wear-resistant coating created through hot isostatic pressing, wherein the journals (7,8) have been formed through forging following application of the wear-resistant coating (13) and have then been mechanically finished.

## Revendications

1. Procédé de fabrication d'un cylindre (1) pour le laminage à froid ou à chaud de produits métalliques plats, où le cylindre (1) présente une section sphérique (6) qui est recouverte d'une couche anti-usure (13) et qui présente deux tenons orientés coaxialement par rapport à la section sphérique (6), un desquels est formé respectivement sur un des côtés avant de la section sphérique (6), comportant les suivantes étapes de travail successives :
a) Mise à disposition d'une ébauche de corps de base (3, 3a, 3b, 3c, 3d), sur laquelle l'on prévoit
- une section sphérique (6) qui présente une forme de base cylindrique allongée et qui consiste en un matériau du corps de base, et
- deux sections brutes de tenon (4, 5), dont une est conçue respectivement sur un des côtés avant de la section sphérique (6) et qui présentent respectivement un diamètre plus grand (dZ) que le diamètre de la section sphérique (6), où le volume de matériau des sections brutes de tenon (4, 5) est égal à au moins le volume du tenon (7, 8) associé au côté avant respectif du cylindre usiné (1) ;
b) Enrobage de la section sphérique (6) avec une gaine tubulaire (9), où la gaine (9) avec ses zones de bordure associées aux sections brutes de tenon (4, 5) est raccordée de manière étanche sur les côtés avant (10, 11) des sections brutes de tenon (4, 5) lui étant respectivement associés et un espace creux (12) entourant la section sphérique (6) est formé entre la gaine (9) et la section sphérique (6) ;
c) Remplissage de l'espace creux (12) avec une poudre d'alliage (M);
d) Pressage isostatique à chaud de la poudre d'alliage (M) afin de former à partir de la poudre d'alliage (M), par compression et frittage, la couche anti-usure (13) reliée par liaison de forme à la section sphérique (6) et enveloppant la section sphérique (6) ;
e) Enlèvement de la gaine (9) de la section sphérique (6) ;
f) Formage des sections brutes de tenon (4, 5) sous forme de tenons (7, 8);
g) Usinage de la section sphérique (6) et des tenons (7, 8).

2. Procédé selon la revendication 1, **caractérisé en ce que** l'ébauche de corps de base (3, 3a, 3b, 3c, 3d) avec sa section sphérique (6) et ses sections brutes de tenon (4, 5) est fabriquée en une seule pièce par un procédé de formage.

3. Procédé selon la revendication 1, **caractérisé en ce que** l'ébauche de corps de base (3, 3a, 3b, 3c, 3d) avec sa section sphérique (6) et ses sections brutes de tenon (4, 5) est fabriquée en une seule pièce par le forgeage d'une ébauche de coulé.

4. Procédé selon la revendication 1, **caractérisé en ce que** la section sphérique (6) et les sections brutes de tenon (4, 5) de l'ébauche de corps de base (3, 3a, 3b, 3c, 3d) sont fabriquées séparément l'une de l'autre et sont ensuite reliées entre elles de manière indétachable.

5. Procédé selon la revendication 1, **caractérisé en ce que** la section sphérique (6) du corps de base brut (3, 3a, 3b, 3c, 3d) porte sur au moins un de ses côtés avant respectivement un embout de tenon (20, 21) et **en ce que** la section brute de tenon (4, 5) est fabriquée de telle sorte sur le côté avant concerné que l'embout de tenon (20, 21) est entouré par un enrobage rempli avec une poudre d'alliage et **en ce que** la poudre d'alliage entourant l'embout de tenon (20, 21) est compressée et frittée par un pressage isostatique à chaud de sorte à être reliée par liaison de forme avec l'embout de tenon (20, 21) et forme ainsi avec l'embout de tenon (20, 21) la section brute de tenon (4, 5).

6. Procédé selon la revendication 5, **caractérisé en ce que** le diamètre (dS") de l'embout de tenon (21) est supérieur au diamètre (dB) de la section sphérique (6).

7. Procédé selon la revendication 5 ou 6, **caractérisé en ce que** la poudre d'alliage associée à la section sphérique (6) se différencie de la poudre d'alliage qui est associée à la section brute de tenon (4, 5).

8. Procédé selon l'une des revendications 5 à 7, **caractérisé en ce que** le pressage isostatique à chaud de la poudre d'alliage associée à la section sphérique (6) et de la poudre d'alliage associée à la section brute de tenon (4, 5) a lieu simultanément.

9. Procédé selon la revendication 1, **caractérisé en ce que** la section sphérique (6) du corps de base brut (3, 3a, 3b, 3c, 3d) porte au moins sur un de ses côtés avant respectivement un embout de tenon (20, 21) et **en ce que** sur cet embout de tenon (20, 21) est fixé un anneau (22, 23) qui forme conjointement à l'embout de tenon (20, 21) la section brute de tenon (4, 5).

10. Procédé selon l'une des revendications précédentes, **caractérisé en ce que** le remplissage de l'espace creux (12) enveloppant la section sphérique (6) a lieu à travers une ouverture (15) formée dans une des sections brutes de tenon (4, 5).

11. Cylindre (1) pour le laminage à froid ou à chaud de produits métalliques plats avec un corps de base qui présente une section sphérique (6) et des tenons (7, 8) formée sur ses côtés avant, où la section sphérique (6) est pourvue d'un revêtement résistant à l'usure produit par un pressage isostatique à chaud, où les tenons (7, 8) sont conçus après l'application du revêtement résistant à l'usure (13) par forgeage et sont ensuite usinés mécaniquement.
